# EUROPÄISCHE PATENTANMELDUNG

(11) **EP 4 071 035 A1**
(43) Veröffentlichungstag der Anmeldung: **12.10.2022**
(21) Anmeldenummer: 22000099.6
(22) Anmeldetag: 07.04.2022
(51) Int. Cl.: B62H 5/00, B62H 5/14

(54) **DIEBSTAHLSICHERUNG FÜR MOTORRÄDER**

(30) Priorität: 07.04.2021 DE 102021001790
(71) Anmelder: Sklenar, Ron, 10439 Berlin (DE); Hartmann, Christoph, 15366 Hoppegarten (DE)
(72) Erfinder: Sklenar, Ron, Berlin (DE); Hartmann, Christoph, Hoppegarten (DE)
(74) Vertreter: Gruner, Leopold Joachim

(57) **Zusammenfassung**

Die vorliegende Erfindung betrifft eine Vorrichtung zur Sicherung von Motorrädern mit hohler Steckachse (4) gegen Diebstahl. Bekannte Diebstahlsicherungen setzen an verschiedenen Bauteilen an, die allerdings leicht entfernt werden können und Diebe nicht hinreichend daran hindern, den wirtschaftlich entscheidenden Großteil des Motorrads in ein anderes Fahrzeug einzuladen oder auf einen Hänger aufzuladen und Motorräder somit nur unzureichend gegen Wegnahme sichern. Um eine höhere Sicherheit für Motorräder mit hohler Steckachse (4) zu erreichen, wird die hohle Steckachse (4) mithilfe eines Bolzens (1) und eines Schlosssystems (6) angeschlossen und mit einem feststehenden oder verankerten Gegenstand (9) am Abstellort des Motorrades verbunden. Die Erfindung bietet den Vorteil, dass sie eine Mitnahme des Motorrades erschwert, da eine Zerstörung des Bolzens (1) oder der angeschlossenen Bauteile des Motorrades schwer möglich oder wirtschaftlich unattraktiv ist.

## Beschreibung

### TECHNISCHES GEBIET

Die Erfindung betrifft ein System zur Diebstahlsicherung von Motorrädern mit hohler Steckachse an Vorder- und/oder Hinterrad sowie dessen Verwendung und ein Verfahren zum Sichern eines Motorrades vor Diebstahl.

### STAND DER TECHNIK

Motorräder verkörpern heutzutage einen erheblichen Wert und werden daher häufig gestohlen. Diese Gefahr besteht vor allem dann, wenn sie im Freien abgestellt werden, aber auch dann, wenn sie in einer Garage untergestellt werden, wo Diebe ggf. sogar mehr Zeit und Ruhe haben, um eingesetzte Diebstahlsicherungen unbeobachtet zu entfernen oder zu umgehen.

Zugleich weisen Motorräder heutzutage großflächige Verkleidungen auf. Dadurch werden gerade die wesentlichen Bauteile (wie z.B. der Rahmen, die Gabel des Vorderrades und die Schwinge des Hinterrades) weitgehend verdeckt. Dies hat zur Folge, dass die wesentlichen Bauteile eines Motorrades nicht durch z.B. Ketten, Stahlseile oder ähnliche Sicherungselemente diebstahlgesichert und/oder an feststehenden oder verankerten Gegenständen am Abstellort des Motorrads (wie z.B. Laternen, Bäume, Leitplanken) angeschlossen werden können. Dies ist umso mehr ein Missstand, als dass ein Sichern dieser Bauteile durch Anschließen besonders sinnvoll wäre, weil sie so massiv sind, dass sie nur unter erheblichem Kraft- und Zeitaufwand von Diebstahlsicherungen befreit werden können, und zugleich so wertvoll sind, dass Diebe sie i.d.R. ungern zerstören oder beschädigen.

Da die wesentlichen Bauteile also aufgrund ihrer Verkleidungen nicht mit bekannten und üblichen Diebstahlsicherungen angeschlossen werden können, produzieren Hersteller vor allem Diebstahlsicherungen, die bei leichter zugänglichen Motorradbauteilen (z.B. an den Rädern) ansetzen.

So sind beispielsweise Diebstahlsicherungen bekannt, die das Wegfahren mit dem Motorrad verhindern sollen. So gibt es Diebstahlsicherungen, die derart auf die Lenkvorrichtung des Motorrads einwirken, dass dieses im gesicherten Zustand nicht gesteuert werden kann. Andere bekannte Diebstahlsicherungen wirken auf den Antrieb des Motorrads, indem sie z.B. das Kettenrad oder die Kette blockieren. Weitere bekannte Diebstahlsicherungen werden auf die Bremsscheibe aufgesetzt und blockieren auf diese Weise die Drehung der Bremsscheibe und damit auch die Drehung des Rades. Weitere bekannte Diebstahlsicherungen verklammern die Vorderbremse mit dem Griff des Lenkers.

Der wesentliche Nachteil der vorgenannten und vergleichbarer Diebstahlsicherungen besteht allerdings darin, dass sie den Abtransport des Motorrades nicht verhindern können. So kann das Motorrades bspw. auf eine weiche Unterlage gekippt werden und mitsamt der Diebstahlsicherung auf oder in ein Fahrzeug oder auf einen Anhänger befördert werden, um die Diebstahlsicherung an einem anderen, ungestörten Ort zu entfernen.

Weitere bekannte Diebstahlsicherungen sehen etwa vor, dass eine Kette, ein Stahlseil oder ein vergleichbares Verbindungselement durch die Speichen des Vorder- oder Hinterrades oder/und die Bremsscheibe geführt wird und das Vorder- oder Hinterrad auf diese Weise mit einem feststehenden oder verankerten Gegenstand am Abstellort des Motorrades (z.B. Laternen, Bäume, Leitplanken) verbunden wird, um sowohl die Raddrehung, als auch den Abtransport des gesamten Motorrads zu verhindern oder jedenfalls zu erschweren.

Allerdings ist auch mit dieser Art von Diebstahlsicherung ein wesentlicher Nachteil verbunden, nämlich der, dass sich das Rad und die Bremsscheibe relativ schnell, geräuscharm und mit handelsüblichem Werkzeug vom Rest des Motorrads lösen lassen, indem die Achsmutter und wenige Schrauben gelöst und die hohle Steckachse herausgezogen wird. Einen solchen Vorgang könnten Passanten und Anwohner leicht als Reparaturmaßnahme durch den Eigentümer des Motorrads und nicht als Diebstahl bewerten.

Damit ist es also möglich, die mit bekannten Diebstahlsicherungen gesicherten Bauteile vom Motorrad zu lösen und am Tatort zurücklassen, um sich mit dem wertbildenden Großteil des Motorrades vom Tatort zu entfernen.

Auch elektronische Diebstahlsicherungen erschweren einen Diebstahl nur bedingt, da sie sich umgehen lassen und auch den Abtransport des Motorrades nicht verhindern können. Selbst Diebstahlsicherungen mithilfe eines GPS-Senders zur Ortung des Motorrades schützen nur bedingt gegen Diebstahl, da die GPS-Signale abgeschirmt oder gestört werden können.

Der nächstliegende Stand der Technik ergibt sich insbesondere aus den folgenden Patentschriften:
In der Patentschrift US 6 152 541 A ist ein Schnellspannsystem für Räder beschrieben, das durch die Hohlachse eines Zweirades geführt und durch eine Verriegelungsanordnung gesichert wird, wobei die Verriegelungsanordnung in der Endkappe untergebracht ist.

Jedoch ist diese Erfindung nicht zur Diebstahlsicherung bei Motorrädern, insbesondere bei Motorrädern mit hohler Steckachse (hierin auch als Hohlachse bezeichnet) geeignet, denn erstens werden die Räder bei Motorrädern (anders als bei Fahrrädern) nicht mit Schnellspannern befestigt, weil es aufgrund des Gewichts eines Motorrades und aus Sicherheitsgründen nicht ausreicht, die Holme an Gabel oder Schwinge nur mechanisch zusammenzuziehen.

Zweitens umschließen die Holme von Gabel oder Schwinge bei Motorrädern mit hohler Steckachse die Hohlachse vollständig und werden nicht auf die Hohlachse aufgesetzt, wie z.B. bei Fahrrädern.

Drittens verhindert das beschriebene Schnellspannsystem nur die Demontage des Rades, nicht aber eine Ortsveränderung des Zweirades durch Wegfahren oder Wegrollen, weil das Schnellspannsystem nicht an feststehenden oder verankerten Gegenständen befestigt werden kann.

Zudem ist der Erfindung nachteilig, dass die Achse eine Art Zahnradgetriebe aufweist und man die Achse daher nur in einer bestimmten Orientierung in die Endkappe mit der Verriegelungsanordnung einführen kann. Weiterhin ist die Produktion einer solchen Achse aufgrund des eingebrachten Zahnradgetriebes eine/n aufwendigere/n und teurere/n Struktur/Aufbau als bspw. ein einfacher Bolzen.

In der Patentschrift EP 1 559 645 B1 ist ein Sattelstützenschloss auf Basis eines Schnellspannsystems beschrieben, das eine Klemmschelle zusammenzieht. Jedoch ist diese Erfindung nicht zur Diebstahlsicherung bei Motorrädern geeignet. Insbesondere ist die Erfindung nicht geeignet für eine Diebstahlsicherung an einem Rad eines Motorrads, denn erstens handelt es sich bei der Erfindung ausdrücklich um ein Schloss für die Sattelstütze, die zudem bei Motorrädern anders als bei Fahrrädern befestigt sind. Zweitens sind die Räder bei Motorrädern, wie bereits oben angeführt, nicht mit Schnellspannern befestigt, weil es aufgrund des Gewichts eines Motorrades und aus Sicherheitsgründen nicht ausreicht, die Holme an Gabel oder Schwinge nur mechanisch zusammenzuziehen.

Zudem bilden das Schloss und der Hebel eine bauliche Einheit. Da der Hebel dazu benötigt wird, die Klemmschelle festzuziehen, um den Sattel zu befestigen, ist das Schloss somit auch ständig Witterungsbedingungen ausgesetzt. Ein Entfernen des Schlosses, um dieses witterungsgestützt zu verstauen, hätte nachteilig zur Folge, dass der Sattel nicht mehr durch die Klemmschelle gesichert ist.

In der Patentschrift DE 692 29 785 T2 ist ein Motorradschloss beschrieben, das an einem drehbaren Teil des Rades, nämlich der Bremsscheibe ansetzt und durch den Kontakt des Schlosses mit einem festen Teil des Motorrades die Drehung des Rades verhindert. Nachteilig anzusehen ist jedoch, dass das Motorradschloss seine Wirkung bereits in dem Moment verliert, in dem ein Dieb kurzerhand das Rad mit der angeschlossenen Bremsscheibe mit handelsüblichem Werkzeug innerhalb weniger Minuten ausbaut und den verbleibenden Teil des Motorrades dann abtransportiert. Mit etwas mehr Geduld kann ein Dieb obendrein das Rad von der Bremsscheibe lösen, sodass für den Eigentümer des Motorrades nur die angeschlossene Bremsscheibe zurückbleibt. Zwar sieht die Erfindung für dieses Problem einen Schild vor, der einige der Bolzen an der Nabe des Motorrades bedeckt, wodurch eine Entfernung des Vorderrades schwierig wird, jedoch kann der Schild relativ einfach umgebogen werden, um an die darunter liegenden Verbindungselemente zu gelangen und diese zu lösen.

Zudem ist kann die Erfindung nur an einem Vorderrad eines Motorrads angebracht werden, da nur dort die Bremsscheibe lokalisiert ist. Die Anbringung des Schlosses ist außerdem kompliziert, da einerseits das im Wesentlichen U-förmige Schloss zwischen Bremsscheibe und Felge hindurchgesteckt werden muss und andererseits die passenden Öffnungen für den Schließbolzen ausgewählt werden müssen. Das Hantieren in diesem Beriech des Motorrads geht zwangsläufig mit einer ungewollten Verschmutzung der Hände des Nutzers einher.

In der Patentschrift EP 0 774 404 A1 ist ein Motorradschloss beschrieben, das durch das Rad des Motorrades gelegt werden kann, wobei das Schloss aus einem biegsamen, länglichen Körper besteht, und an einem Ende einen Kopf aufweist und am anderen Ende ein ringförmiges Element aufweist, wobei der Kopf durch das ringförmige Element geführt werden kann, um eine Schlaufe zu bilden. Die Schlaufe kann auch um einen feststehenden oder verankerten Gegenstand gelegt werden, wobei der Kopf, der das Verschlusssystem enthält, an den Rahmen des Zweirads befestigt werden kann. Sofern das Motorradschloss lediglich als Schlaufe durch ein Rad geführt wird, kann einem Diebstahl nicht vorgebeugt werden, da das Zweirad mitsamt der Diebstahlsicherung abtransportiert werden kann. Um das Verschlusssystem mit dem Rahmen des Zweirades verbinden zu können, ist es erforderlich, dass der Rahmen eine entsprechende Vorrichtung, bspw. einen Bolzen umfasst, der mit dem Rahmen verschweißt ist. Jedoch sind solche mit dem Rahmen verschweißten Bolzen keine Standardausführung von Motorrädern und zudem aus ästhetischen Gründen vom Nutzer nicht gewollt.

In der Patentschrift WO 02/102 649 A1 ist ein Motorradschloss beschrieben, das zum einen Teil an die Bremsscheibe und zum anderen Teil an der Lenkerstange des Motorrades angebracht wird. Hier ist jedoch als nachteilig anzusehen, dass die Befestigung der Erfindung kompliziert ist, da einerseits eine Kappe mit einem Schloss auf einen betätigten Bremshebel aufgesetzt und abgeschlossen werden muss und andererseits ein weiteres Schloss mit der Bremsscheibe verbunden werden muss. Zudem muss die Vorrichtung noch mit einem feststehenden oder verankerten Gegenstand verbunden werden. Außerdem hat das beschriebene Motorradschloss zur Folge, dass der Bremshebel dauerhaft unter Spannung steht, solange das Motorrad auf diese Weise angeschlossen ist.

### AUFGABE

Der hier beschriebenen Erfindung liegt daher die Aufgabe zugrunde, ein kompaktes System zur Diebstahlsicherung für Motorräder mit hohler Steckachse an Vorder- und/oder Hinterrad zu schaffen, die im Vergleich zu bekannten Diebstahlsicherungen eine höhere Sicherheit gegen Diebstahl gewährt.

### LÖSUNG

Die Aufgabe wird mit einer Diebstahlsicherung für Motorräder mit hohler Steckachse an Vorder- und/oder Hinterrad, insbesondere durch eine Steckachsendiebstahlsicherung gelöst, indem ein zylindrisch geformter Bolzen in die hohle Steckachse eines Vorder- oder Hinterrades eines Motorrads einführbar ist, wobei der Bolzen an seinem einen Ende (auch: erstes Ende) eine Sicherung gegen Hindurchstecken durch die hohle Steckachse in Form eines Anschlags aufweist, und der Bolzen an seinem anderen Ende (auch: zweites Ende) eine oder mehrere Vertiefungen, Nuten und/oder Einkerbungen aufweist, in die schließbar zu betätigende Elemente eines Schlosssystems lösbar eingreifen können.

Insbesondere wird die Aufgabe mit einer Diebstahlsicherung, insbesondere durch eine Steckachsendiebstahlsicherung mit den Merkmalen des Anspruchs 1 erfüllt. Weitere vorteilhafte Ausgestaltungen sind den Unteransprüchen, der Beschreibung und den Ausführungsbeispielen zu entnehmen.

So umfasst die erfindungsgemäße Diebstahlsicherung für Motorräder mit hohler Steckachse an Vorder- und/oder Hinterrad vorzugsweise einen Bolzen und ein Schlosssystem,
- wobei der Bolzen (1) derart ausgebildet ist, dass dieser in die hohle Steckachse (4) eines Vorder- oder Hinterrades eines Motorrads (5) derart einführbar ist, dass dieser durch das Schlosssystem (6) formschlüssig entlang einer Längsachse der hohlen Steckachse (4) sicherbar ist,
- wobei der Bolzen (1) an einem ersten Ende (14) einen Anschlag (2), bspw. einen Halbrundkopf oder Flachkopf umfasst, der als eine Begrenzung gegen ein gänzliches Hindurchstecken des Bolzens (1) durch die hohle Steckachse (4) eingerichtet ist.

Der Bolzen kann an einem zweiten Ende zumindest eine Vertiefung, zumindest eine Nut und/oder zumindest eine Einkerbung aufweisen, die dazu eingerichtet ist, dass ein schließbar zu betätigendes Element des Schlosssystems lösbar in die Vertiefung, Nut und/oder Einkerbung eingreift.

Es kann vorgesehen sein, dass der Bolzen an dem zweiten Ende mit einem Schlosssystem reversibel verbindbar ist, wobei das schließbar zu betätigende Element des Schlosssystems in eine oder mehrere Vertiefungen, Nuten und/oder Einkerbungen am Bolzen eingreifbar ausgestaltet ist.

Die formschlüssige Sicherung des Bolzens durch das Schlosssystem kann auch derart erreicht werden, dass auf dem Bolzen zumindest ein Beabstandungselement, wie eine Rohrhülse und/oder eine Unterlegscheibe aufgesteckt sind. Dies hat den Vorteil, dass ein Bolzen für verschieden ausgestaltete hohle Steckachsen eingesetzt werden kann und die formschlüssige Sicherung durch das Aufsetzen/Anordnen geeigneter Beabstandungselemente passgenau eingestellt werden kann. Dabei kann der Innendurchmesser des Beabstandungselementes derart ausgestaltet sein, dass dieser im Wesentlichen formschlüssig entlang der Längsachse des Bolzens anordenbar ist. Beispielsweise kann der Bolzen ein Gewinde und das Beabstandungselement ein Gegengewinde umfassen, so dass das Beabstandungselement auf die Längsachse des Bolzens aufgeschraubt werden kann. Hierdurch kann ein unerwünschtes "Klappern" oder Verkanten des Bolzens innerhalb der hohlen Steckachse an Vorder- und/oder Hinterrad vermieden werden.

### ALLGEMEINE VORTEILE

Die Diebstahlsicherung ist einfach zu installieren und kann vorzugsweise an Vorder- und/oder Hinterachse eines Motorrads mit hohler Steckachse angebracht werden, was dem Nutzer entsprechend der Umgebungsbedingungen, in denen das Motorrad abgestellt und gesichert werden soll, mehr Möglichkeiten bietet. Zudem weist die Diebstahlsicherung eine simple und kostengünstige Ausgestaltung auf und reduziert zudem ein Verschmutzen der Hände eines Nutzers während der Handhabung der Diebstahlsicherung. Weitere Vorteile sind der Beschreibung und den Ausführungsbeispielen zu entnehmen.

### BESCHREIBUNG

Die erfindungsgemäße Diebstahlsicherung sieht vor, dass ein bevorzugt zylindrisch geformter Bolzen in die hohle Steckachse des Vorder- und/oder Hinterrades des zu sichernden Motorrads eingeführt wird. Hierbei kann der Bolzen einen runden Querschnitt aufweisen. Alternativ kann der Bolzen, insbesondere entsprechend der Ausgestaltung der hohlen Steckachse an Vorder- und/oder Hinterrade auch einen ovalen oder eckigen Querschnitt aufweisen, allerdings bietet ein runder Querschnitt den Vorteil, dass der Bolzen in der hohlen Steckachse und im Schlosssystem in Längsrichtung leicht drehbar ist und bei einem Diebstahl häufig eingesetzte Werkzeuge zum Auftrennen des Bolzens (z.B. Winkelschleifer) aufgrund der leichtgängigen Drehbarkeit des Bolzens weniger effektiv wirken können.

Im Sinne der vorliegenden Erfindung ist ein Bolzen ein bevorzugt zylindrisch ausgestaltetes Formteil, das derart ausgestaltet ist, dass es in die hohle Steckachse des Vorder- und/oder Hinterrades des zu sichernden Motorrads einführbar ist bzw. eingeführt wird. Der Bolzen weist an zumindest einem (ersten) Ende einen Anschlag, bspw. einen Halbrundkopf oder Flachkopf auf. Der Bolzen kann im Verhältnis zur hohlen Steckachse mit einem Radialspiel in die Aufnahmebohrung eingesetzt werden, so dass er leicht demontierbar ist.

Darüber hinaus kann der Bolzen in seiner Längsausrichtung (Schaft) auch als Knebelkerbstift, bspw. mit zylindrischem Querschnitt und zumindest einem Knebel (= Verdickung) ausgebildet sein, so dass der Bolzen in die hohle Steckachse des Vorder- und/oder Hinterrades gesteckt und darin kraftschlüssig fixiert werden kann.

Es kann auch vorgesehen sein, dass der Bolzen in seiner Längsausrichtung (Schaft) mit Kerben versehen ist, welche den Bolzen entsprechend in einer komplementär ausgestalteten hohlen Steckachse des Vorder- und/oder Hinterrades kraft- bzw. formschlüssig fixieren und eine zusätzliche sichernde Wirkung entfalten.

Gemäß einer bevorzugten Ausgestaltung der Erfindung kann der Bolzen in seiner Längsausrichtung (Schaft) auch als Spannhülse bzw. als Spannstift ausgebildet sein. Vorzugsweise weist die Spannhülse in diesem Fall eine derartige Spannkraft auf, dass diese bei bestimmungsgemäßem Gebrauch durch die muskuläre Krafteinwirkung eines Nutzers gespannt und somit deren endständige Querschnitt(sfläche) verkleinert werden kann. Dadurch kann der Bolzen auch in eine hohle Steckachse des Vorder- und/oder Hinterrades eingeführt werden, deren Querschnitt(sfläche) kleiner ist, als derjenige der Spannhülse, wobei die Spannhülse nach deren Einführung und Beendigung der Krafteinwirkung sich derart ausdehnt, dass die Außenwandung der Spannhülse mit der Innenwandung der hohlen Steckachse kraftschlüssig in Verbindung steht.

Der Bolzen verfügt an einem ersten Ende über einen Anschlag mit abgerundeter oder eckiger Form, dessen Durchmesser bevorzugt größer als der Durchmesser der hohlen Steckachse ist. Da sich die Steckachsen der verschiedenen Motorräder teilweise in ihrem Durchmesser unterscheiden und es aus wirtschaftlichen Gründen sinnvoll erscheinen kann, den Bolzen in einer Einheitsgröße zu produzieren, um in möglichst viele Steckachsen zu passen, kann der Durchmesser des Anschlags auch durch eine ergänzende Unterlegscheibe oder ein vergleichbares Element auf einen Durchmesser übersetzt werden, der größer als der Durchmesser der hohlen Steckachse ist. Der Anschlag kann auch oval oder eckig geformt sein, allerdings bietet eine abgerundete Form den Vorteil, dass Werkzeuge daran weniger leicht angesetzt werden können.

An einem zweiten Ende verfügt der Bolzen bevorzugt über eine oder mehrere Vertiefungen, Nuten oder Einkerbungen, in die schließbar zu betätigende Elemente eines Schlosssystems eingreifen, einrasten oder einhaken können, die darauf basieren, dass ein Schließelement oder mehrere Schließelemente (z.B. Riegel) in eine oder mehrere Vertiefungen, Nuten oder Einkerbungen im Bolzen hineingreifen und nur dann wieder zurück- oder herausgezogen werden können, wenn das Schlosssystem mithilfe eines dazu passenden Schlüssels geöffnet wird.

Die Vertiefungen, Nuten oder Einkerbungen weisen bevorzugt eine solche Ausgestaltung in Form von Tiefe und/oder Breite auf, dass sich die Schließelemente des Schlosssystems haltefest mit dem Bolzen verbinden können, um ein gewaltsames Lösen des Bolzens aus dem Schlosssystem zu verhindern oder mindestens erheblich zu erschweren.

In einer bevorzugten Ausführungsform sind die Vertiefungen, Nuten oder Einkerbungen so ausgeformt, dass der erfindungsgemäße Bolzen und das Schlosssystem im Verhältnis zueinander einen Bewegungsspielraum aufweisen bzw. etwas beweglich gelagert sind, da damit der Vorteil verbunden ist, dass der Bolzen leichter in Längsrichtung rotieren kann und Werkzeuge weniger leicht daran angesetzt werden können. Überdies kann die Verbindung zwischen dem Bolzen und dem Schlosssystem weniger leicht aufgehebelt werden, wenn sie beweglich ist, da Hebelwerkzeuge dann leichter abrutschen und weniger Kraft ausüben können. Formschlüssig bedeutet im Sinne der vorliegenden Erfindung folglich, dass der Bolzen und das Schlosssystem bei bestimmungsgemäßem Gebrauch im Verhältnis zueinander auch einen minimalen Bewegungsspielraum aufweisen können bzw. minimal beweglich zueinander gelagert sind, von maximal 5% Kippung, besonders bevorzugt von maximal 2,5% Kippung, ganz besonders bevorzugt von weniger als 1 % Kippung zueinander bzw. zur hohlen Steckachse aufweisen.

Der Abstand der Vertiefungen, Nuten oder Einkerbungen am erfindungsgemäßen Bolzen ist bevorzugt so ausgestaltet, dass die schließbar zu betätigenden Elemente des Schlosssystems einen leichtgängigen Eingreifvorgang ermöglichen und zugleich eine widerstandsfähige Verbindung mit dem Bolzen eingehen.

In einer bevorzugten Ausführungsform kann der erfindungsgemäße Bolzen auch mit einer Kunststoffschicht überzogen werden, um eine Beschädigung im Lack des Motorrads bei der Handhabung des Bolzens zu vermeiden. Bevorzugt wird dafür ein weicher und/oder reibungsarmer und/oder schmutzabweisender Kunststoff verwendet. Davon jedoch ausgenommen ist bevorzugt der Bereich der Vertiefungen, Nuten oder Einkerbungen, an den das Schlosssystem mit seinen Schließelementen ansetzt, um eine ideale Wirkverbindung zwischen dem erfindungsgemäßen Bolzen und dem Schlosssystem zu erreichen. Beispielsweise ist der Bolzen (1) der Diebstahlsicherung hierzu ganz oder teilweise mit einem Kunststoff beschichtet.

Nach einer bevorzugten Ausgestaltung der vorliegenden Erfindung kann die Diebstahlsicherung, insbesondere das Schlosssystem zumindest ein Eingreifelement umfassen, das bei bestimmungsgemäßer Anbringung der Diebstahlsicherung in den Zwischenraum von zumindest zwei Speichen des Vorder- und/oder Hinterrades eingreift und somit vorteilhaft die Rotation des Rades blockiert. Hierdurch kann ein unerwünschtes Entfernen des Motorrades durch bloßes Wegrollen verhindert werden.

Nach einer bevorzugten Ausgestaltung der vorliegenden Erfindung kann die Diebstahlsicherung, insbesondere das Schlosssystem ferner zumindest ein Greifelement umfassen, das bei bestimmungsgemäßer Anbringung der Diebstahlsicherung derart ausgebildet ist, dass es zumindest eine Speiche des Vorder- und/oder Hinterrades zumindest teilweise umschließt und somit vorteilhaft die Rotation des Rades blockiert. Hierdurch kann ein unerwünschtes Entfernen des Motorrades durch bloßes Wegrollen verhindert werden.

Die Diebstahlsicherung, insbesondere das Schlosssystem kann ferner eine Kette, ein Stahlseil oder ein gleichwertiges Verbindungselement umfassen, welches mit einem feststehenden oder verankerten Gegenstand verbunden oder um einen feststehenden oder verankerten Gegenstand umlegbar oder umführbar ist. Vorzugsweise ist die Kette, das Stahlseil oder das gleichwertige Verbindungselement zumindest über ein Ende, besonders bevorzugt ausschließlich über ein Ende der Kette, des Stahlseils oder ein gleichwertiges Verbindungselement untrennbar (d.h. nicht bloß lediglich über bzw. durch einen Ring geschlauft, sondern stoff-, form- oder klemmschlüssig verbunden).

Das Schlosssystem ist seinerseits mit einem Ende (auch: drittes Ende) einer Kette, einem Stahlseil oder einem ähnlich gleichwertigen Verbindungselement verbunden, das bevorzugt um einen feststehenden oder verankerten Gegenstand am Abstellort des Motorrads (z.B. Laterne, Baum, Leitplanke) herumgelegt werden kann.

Am anderen Ende (auch: viertes Ende) der Kette, des Stahlseils oder des gleichwertigen Verbindungselements befindet sich bevorzugt ein Ring oder eine Schlaufe oder ein ähnlich geschlossenes Element, durch das das Schlosssystem hindurchgesteckt werden kann, um es Schlosssystem sodann mit dem erfindungsgemäßen Bolzen zu verbinden. Der Ring bzw. die Schlaufe und das Schlosssystem sind bevorzugt so geformt, dass das Schlosssystem nur dann durch den Ring bzw. die Schlaufe geführt werden kann, wenn sich das Schlosssystem nicht in seiner erfindungsgemäßen Funktion auf dem Bolzen befindet. Hierzu ist das Schlosssystem bevorzugt mit einem Sporn, einer Erhöhung oder einem vergleichbaren Element versehen, über das der Ring bzw. die Schlaufe nicht hinweggeführt werden kann, wenn der Bolzen erfindungsgemäß mit dem Schlosssystem verbunden ist. Der Vorteil ist, dass der erfindungsgemäße Bolzen nach dem Herausziehen aus der hohlen Steckachse wieder mit dem Schlosssystem verbunden und am Abstellort des Motorrads angeschlossen zurückgelassen werden kann, ohne dass der Bolzen selbst zum Gegenstand eines Diebstahls wird. Es ist nämlich ein in der Praxis häufig ausgeführter Vorgang, dass Diebstahlsicherungen nicht mitgeführt, sondern am Abstellort des Motorrads zurückgelassen werden, um das Motorrad nach der Rückkehr wieder an seinem gewohnten Platz anzuschließen.

In einer weiteren Ausführungsform kann das Schlosssystem auch mit einer Kette, einem Stahlseil oder einem gleichwertigen Verbindungselement verbunden sein, das an seinem vierten Ende mit einem in Wand oder Boden fest zu verankernden Halteelement verbunden ist. Dieses Halteelement kann fest mit einer Wand oder dem Boden eines Raumes (z.B. Garage) oder eines Unterstands verankert werden, wobei die Verankerung z.B. in einer Verschraubung oder Verklebung bestehen kann. Derartige Elemente der Wand- oder Bodenverankerung sind bereits bekannt und bieten eine erhebliche Sicherheit, vor allem, wenn Schraubenköpfe nach dem Anbringen des Wand- oder Bodenankers unbrauchbar gemacht werden.

In einer weiteren bevorzugten Ausführung der Erfindung weist der Bolzen ein Gewinde auf, auf das eine Mutter auf- und abgeschraubt werden kann. Aus der Möglichkeit des Aufschraubens einer Mutter ergibt sich der Vorteil, dass der erfindungsgemäße Bolzen in der hohlen Steckachse des Motorrads fixiert und beim Betrieb des Motorrads in der hohlen Steckachse mitgeführt werden kann, sodass der Bolzen weder in einer Tasche mitgeführt noch am Abstellort zurückgelassen werden muss. Zu dauerhaften Montage des erfindungsgemäßen Bolzens werden bevorzugt zusätzlich Adapterringe genutzt, die den Bolzen in der hohlen Steckachse zentrieren.

Damit hat die Erfindung in Kombination mit bekannten Schlosssystemen vor allem den Vorteil, dass das Motorrad nur unter erschwerten Bedingungen gestohlen werden kann.

So kann ein erfindungsgemäß angeschlossenes Motorrad nicht ohne Weiteres weggefahren und auch nicht in bzw. auf ein anderes Fahrzeug ein- oder aufgeladen werden, da es durch den erfindungsgemäßen Bolzen an einem feststehenden oder verankerten Gegenstand am Abstellort des Motorrads (z.B. Laterne, Baum, Wand- oder Bodenanker) angeschlossen ist.

Ebenso besteht der Vorteil, dass - im Gegensatz zu bekannten Diebstahlsicherungen - das Vorder- oder Hinterrad nicht schnell und unauffällig mit handelsüblichem Werkzeug ausgebaut werden kann, da der erfindungsgemäße Bolzen über die hohle Steckachse mit der Gabel bzw. der Schwinge des Motorrads verbunden ist und dadurch ein Herausziehen der Steckachse verhindert wird. Der erfindungsgemäße Bolzen stellt also eine feste Verbindung zwischen der Gabel des Vorderrades bzw. der Schwinge des Hinterrades und einem feststehenden oder verankerten Gegenstand am Abstellort des Motorrades her.

Zwar könnte der erfindungsgemäße Bolzen mit einem Winkelschleifer, einer Säge oder einem anderen Werkzeug zertrennt werden. Allerdings besteht der erfindungsgemäße Bolzen bevorzugt aus gehärtetem Stahl mit einem erheblichen Durchmesser, sodass ein solcher Trennvorgang besonderen Krafteinsatz erfordert, etliche Zeit in Anspruch nimmt und ggf. erhebliche Aufmerksamkeit von Passanten oder Anwohnern erregt. Dies gilt umso mehr, als ein in Längsrichtung zylindrisch geformter Bolzen in der hohlen Steckachse des Motorrads längs rotieren kann und Werkzeuge daher nur schwer einen Ansatzpunkt für den Trennvorgang finden. Der zu wählende Durchmesser des Bolzens richtet sich einerseits nach dem Innendurchmesser der hohlen Steckachse und andererseits nach dem geforderten Widerstand gegen ein, diesen zertrennendes, Werkzeug.

Dasselbe gilt sinngemäß für das Zertrennen des Verbindungselements (z.B. Kette, Stahlseil, etc.), mit dem die Vorderachse oder die Schwinge des Motorrads über die Steckachse, den erfindungsgemäßen Bolzen und das Schlosssystem an einem feststehenden oder verankerten Gegenstand am Abstellort des Motorrads angeschlossen ist, da auch das Verbindungselement bevorzugt aus gehärtetem Stahl besteht.

Darüber hinaus besteht theoretisch die Möglichkeit, die Gabel am Vorderrad, die Schwinge am Hinterrad oder den Rahmen des Motorrads mithilfe eines Werkzeugs zu zertrennen. Allerdings wäre auch dies mit erheblichem Kraft- und Zeitaufwand sowie Lärm verbunden, der gewöhnlich Aufmerksamkeit bei Anwohnern und Passanten erregt. Vor allem aber würden hierdurch wesentliche und hochwertige Bauteile des Motorrads irreparabel zerstört, sodass der Diebstahl eines erfindungsgemäß gesicherten Motorrads auch wirtschaftlich unattraktiv wird.

Ein weiterer Vorteil der Erfindung besteht darin, dass es sich dabei um ein einfaches und kompaktes System zur Diebstahlsicherung handelt, die genauso einfach und schnell wie handelsübliche und bekannte Diebstahlsicherungen zu installieren ist.

In einer weiteren Ausführungsform ist die Länge des Bolzens einstellbar, wodurch die Länge des Bolzens vorteilhaft an die Länge der hohlen Steckachse angepasst werden kann. So kann beispielsweise auf Unterlegscheiben verzichtet werden, um eine kürzere Länge der hohlen Steckachse auszugleichen.

Um die Länge des Bolzens einstellbar zu machen, kann der Bolzen aus zwei, teleskopartig ineinander verschiebbaren, Bolzenhälften bestehen. Dabei umfasst eine erste Bolzenhälfte Löcher, die in regelmäßigen Abständen entlang der Längsachse der ersten Bolzenhälfte angeordnet sind. Eine zweite Bolzenhälfte umfasst zumindest zwei gegenüberliegend angeordnete Federbolzen, welche manuell mindestens so weit nach innen gedrückt werden können, so dass die Oberfläche der Federbolzen mit der Außenfläche der zweiten Bolzenhälfte plan liegen. Die zweite Bolzenhälfte kann in der ersten Bolzenhälfte teleskopartig geführt werden. Wenn die Federbolzen jeweils ein Loch erreicht haben, schnappen die Federbolzen hervor und bewirken einen Formschluss der beiden Bolzenhälften. Die Löcher sind so zueinander beabstandet, dass verschiedene Längen von hohlen Steckachsen abgedeckt sind.

Bevorzugt sind die Löcher sowie auch die Federbolzen so auf den Bolzenhälften angeordnet, dass diese von dem Mantel der hohlen Steckachse abgedeckt sind und nur zugänglich sind, wenn die Bolzenhälften aus der hohlen Steckachse entnommen werden.

Dem Fachmann ist klar, dass die hierfür teilweise hohle Ausgestaltung zumindest der ersten Bolzenhälfte das Sicherheitslevel verringert, da die Federbolzen möglicherweise über eine Torsion ausgebrochen werden könnten und der Querschnitt des Bolzens durch die Löcher geschwächt wird. Um eine ausreichend hohe Torsionskraft am Bolzen zu erzeugen, müssen jedoch beide seiner Enden gegriffen werden können. Dies wird jedoch am ersten Ende dadurch erschwert, indem der Anschlag halbrund ausgestaltet ist und somit kein Werkzeug ansetzen kann und am zweiten Ende dadurch erschwert, indem das Schlosssystem um den Bolzen einen Bewegungsspielraum aufweist.

Alternativ könnte man anstelle von Federbolzen diese so ausgestalten, dass sie nicht federnd gelagert und somit jederzeit individuell einstellbar sind, sondern dass sie nach dem Kauf einmalig in die richtigen Löcher eingeschlagen werden, um dann dauerhaft die (einmal eingestellte) Bolzenlänge zu definieren.

Um einen Griff am Anschlag weiter zu erschweren, kann der Anschlag auch so ausgestaltet sein, dass er formschlüssig mit dem Bolzen verbunden, aber frei um die Längsachse des Bolzens rotierbar ist. Dies ist insbesondere für eine nachfolgend beschriebene Ausführungsform vorteilhaft.

In einer weiteren Ausführungsform können die Bolzenhälften über eine Verschraubung miteinander verbunden sein. Dadurch ist vorteilhaft erreicht, dass die Länge des Bolzens feiner eingestellt werden kann, als es bei der oben beschriebenen Ausführungsform der Fall ist.

Die vorliegende Erfindung umfasst auch ein Diebstahlsicherungssystem für Motorräder, umfassend eine Diebstahlsicherung wie hierin definiert und eine hohle Steckachse eines Vorder- und/oder Hinterrades, insbesondere eine hohle Steckachse eines Vorder- und/oder Hinterrades eines Motorrads.

Darüber hinaus umfasst die vorliegende Erfindung auch Verfahren zum Sichern eines Motorrades vor Diebstahl, insbesondere eines Motorrades mit hohler Steckachse, an Vorderrad und/oder Hinterrad, umfassend die folgenden Schritte
- Bereitstellen eines Bolzens und eines Schlosssystems (jeweils wie hierin definiert), insbesondere einer Diebstahlsicherung bzw. einer Steckachsendiebstahlsicherung (wie hierin definiert), wobei die Diebstahlsicherung einen Bolzen und ein Schlosssystem umfasst,
- Einführen des Bolzens in die hohle Steckachse eines Vorder- oder Hinterrades eines Motorrads, das eine hohle Steckachse umfasst,
   wobei der Bolzen an einem ersten Ende einen Anschlag (**2**) umfasst, der als eine Begrenzung gegen ein gänzliches Hindurchstecken des Bolzens (**1**) durch die hohle Steckachse (**4**) eingerichtet ist,
   wobei der Bolzen (**1**) an einem zweiten Ende (**15**) zumindest eine Vertiefung, zumindest eine Nut und/oder zumindest eine Einkerbung (**3**) aufweist, die dazu eingerichtet ist, ein schließbar zu betätigende Elemente eines Schlosssystems (**6**) lösbar in die Vertiefung, Nut und/oder Einkerbung eingreifbar sind,
- Führen des Schlosssystem (**6**) durch eine Kette, ein Stahlseil oder ein gleichwertiges Verbindungselement (**7**), welches mit einem feststehenden oder verankerten Gegenstand (**12**) verbunden oder um einen feststehenden oder verankerten Gegenstand (**12**) umlegbar oder umführbar ist.
- Reversibles Verbinden des Bolzens (**1**) an dessen zweiten Ende (**15**) mit einem Schlosssystem (**6**), wobei die schließbar zu betätigenden Elemente des Schlosssystems (**6**) in eine oder mehrere Vertiefungen, Nuten und/oder Einkerbungen (**3**) am Bolzen (**1**) eingreifbar ausgestaltet sind, und

Die vorliegende Erfindung umfasst auch die Verwendung einer Diebstahlsicherung, insbesondere durch eine Steckachsendiebstahlsicherung (wie hierin definiert) zum Sichern eines Motorrades, insbesondere eines Motorrades mit hohler Steckachse an Vorder- und/oder Hinterrad.

### AUSFÜHRUNGSBEISPIELE

Nachfolgend wird die Erfindung anhand bevorzugter Ausführungsformen mit einzelnen Figuren genauer erläutert. Es zeigt in nicht maßstabsgerechter Darstellung:
- Figur 1: einen erfindungsgemäßen Bolzen (1) in einer schematischen Seitenansicht,
- Figur 2: eine vereinfachte schematische Darstellung eines erfindungsgemäßen Bolzens (1) in der hohlen Steckachse (4) eines Vorder- oder Hinterrades eines Motorrads (5) mit einem Schlosssystem (6), das über ein Verbindungselement (7) mit einem feststehenden oder verankerten Gegenstand (12) verbunden ist,
- Figur 3: eine vereinfachte schematische Darstellung eines erfindungsgemäßen Bolzens (1) in der hohlen Steckachse (4) eines Vorder- oder Hinterrades eines Motorrads (5) mit einem Schlosssystem (6), das über ein Verbindungselement (7) mit einem an Wand oder Boden befestigten Halteelement (9) verbunden ist,
- Figur 4: einen erfindungsgemäßen Bolzen (1) mit einem Gewinde (10) in einer schematischen Seitenansicht,
- Figur 5A: eine vereinfachte schematische Darstellung eines erfindungsgemäßen Bolzens (1) mit dem Schlosssystem (6) und dem Verbindungselement (7) in einem nicht miteinander verbundenen Zustand,
- Figur 5B: eine vereinfachte schematische Darstellung eines erfindungsgemäßen Bolzens (1) mit dem Schlosssystem (6) und dem Verbindungselement (7) in einem miteinander verbundenen Zustand.
- Figur 6A: eine perspektivische Ansicht der rechten Seite in Fahrtrichtung der Befestigung des Hinterrades (5) mit einem in die hohle Steckachse (4) eingeführten Bolzen (1), wobei hier der Anschlag (2) des Bolzens zu sehen ist.
- Figur 6B: eine perspektivische Ansicht der linken Seite in Fahrtrichtung der Befestigung des Hinterrades (5) mit einem in die hohle Steckachse (4) eingeführten Bolzen (1), an dem kein Schlosssystem (6) befestigt ist.
- Figur 7: eine schematische, perspektivische Ansicht eines erfindungsgemäßen Bolzens (1), der zwei telekopierbar gegeneinander verschiebbaren Bolzenhälften (27, 28) umfasst.

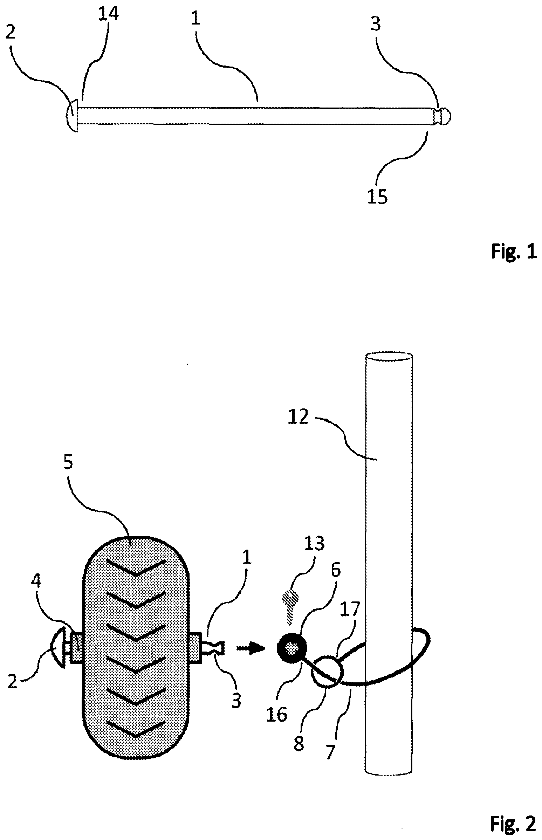

In **Figur 1** wird ein erfindungsgemäßer Bolzen (1) in einer bevorzugter Ausführungsform mit zylindrischen Längsform, einem abgerundeten Anschlag (2) und einer Vertiefung, Nut oder Einkerbung (3) dargestellt.

In **Figur 2** wird ein erfindungsgemäßer Bolzen (1) in einer bevorzugten Ausführungsform mit zylindrischen Längsform, einem abgerundeten Anschlag (2) und einer Vertiefung, Nut oder Einkerbung (3) dargestellt. Der Bolzen (1) ist durch die hohle Steckachse (4) des Vorder- oder Hinterrades eines Motorrades (5) gesteckt, sodass der Anschlag (2) an der hohlen Steckachse (4) anlegbar ist. Auf der Seite der Vertiefung, Nut oder Einkerbung (3) wird sodann ein Schlosssystem (6) mit einem oder mehreren Schließelementen, die in die Vertiefung, Nut oder Einkerbung (3) einrasten können, angebracht, wobei der Bolzen (1) durch die in dem Schlosssystem (6) befindlichen Schließelemente arretiert und nur dann aus dem Schlosssystem (6) gezogen werden kann, wenn die Schließelemente mithilfe eines zum Schlosssystem (6) passenden Schlüssels (13) aus der Vertiefung, Nut oder Einkerbung (3) am Bolzen (1) herausbewegt werden. Das Schlosssystem (6) ist seinerseits mit einer Kette, einem Stahlseil oder einem gleichwertigen Verbindungselement (7) verbunden, das um einen feststehenden oder verankerten Gegenstand (12) am Abstellort des Motorrads (z.B. Laterne, Baum, Leitplanke) herumgelegt und durch einen am vierten Ende des Verbindungselements (7) befindlichen Ring, eine ebendort befindliche Schlaufe oder ein vergleichbares Element (8) hindurchgeführt wird.

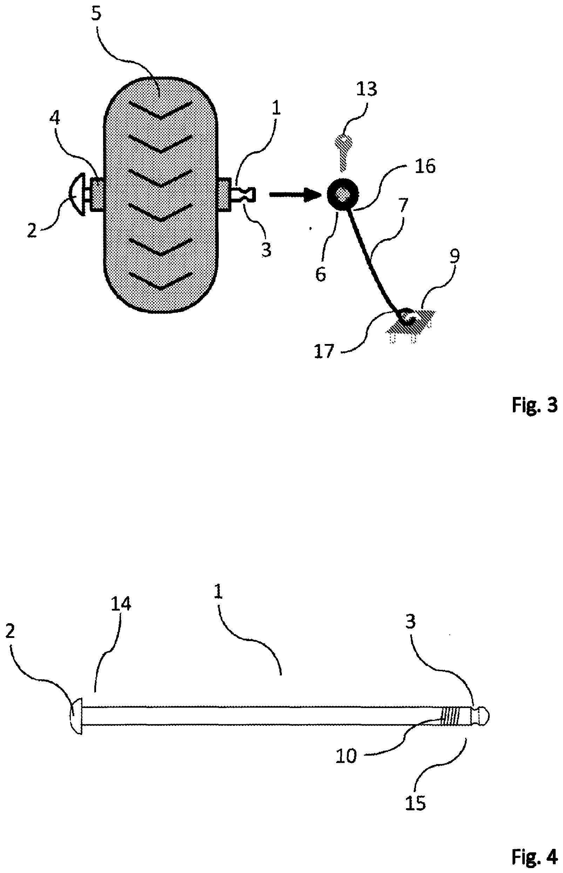

In **Figur 3** wird dasselbe wie in Figur 2 dargestellt, mit dem Unterschied, dass das Schlosssystem (6) über das Verbindungselement (7) an einem Haltelement (9) in Form eines Wand- oder Bodenankers befestigt ist und das Motorrad somit direkt an einer Wand oder dem Boden z.B. einer Garage oder eines Unterstandes angeschlossen werden kann.

In **Figur 4** wird ein erfindungsgemäßer Bolzen (1) darstellt, der neben dem Anschlag (2) und der Vertiefung, Nut oder Einkerbung (3) ein Gewinde (10) aufweist, auf das eine Mutter am Bolzen (1) geschraubt werden kann, durch die der Bolzen (1) in der hohlen Steckachse (4) fixiert und im Betrieb des Motorrads mitgeführt werden kann.

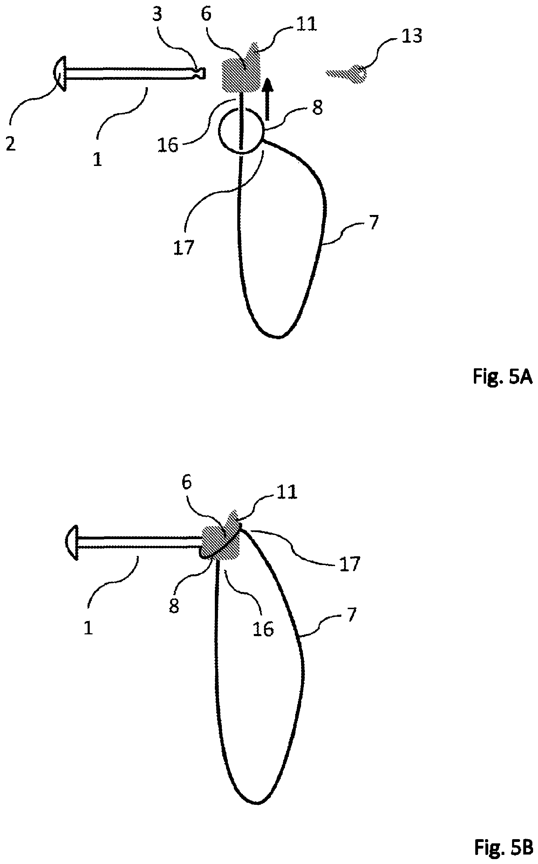

In **Figur 5A** wird ein Schlosssystem (6) dargestellt, das so geformt ist, dass durch einen Sporn oder eine Erhöhung (11) sichergestellt wird, dass der Ring bzw. die Schlaufe (8) nur dann über das Schlosssystem (6) gezogen oder geführt werden kann, wenn der erfindungsgemäße Bolzen (1) nicht im Schlosssystem (6) eingerastet ist.

In **Figur 5B** wird dasselbe wie in Figur 5A dargestellt, mit dem Unterschied, dass der erfindungsgemäße Bolzen (1) im Schlosssystem (6) eingerastet ist und der Ring bzw. die Schlaufe (8) nicht sowohl über den Sporn bzw. die Erhöhung (11) am Schlosssystem (6) als auch über den Bolzen (1) im verriegelten Zustand gezogen werden kann.

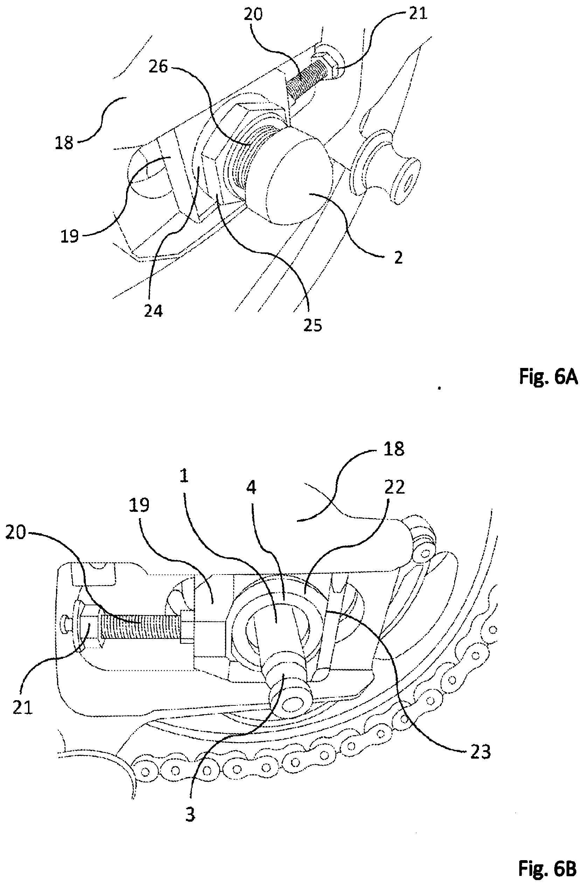

In **Figur 6A** und **6B** ist ein in die hohle Steckachse (4) eingeführter Bolzen (1) dargestellt, wobei das Schlosssystem (6) nicht angeschlossen/ befestigt ist. Der Anschlag (2) ist so ausgestaltet, dass mit verbundenem Schlosssystem (6) ein Zugriff auf die Achsmutter (25) mit einem Werkzeug erschwert ist, idealerweise nicht möglich ist.

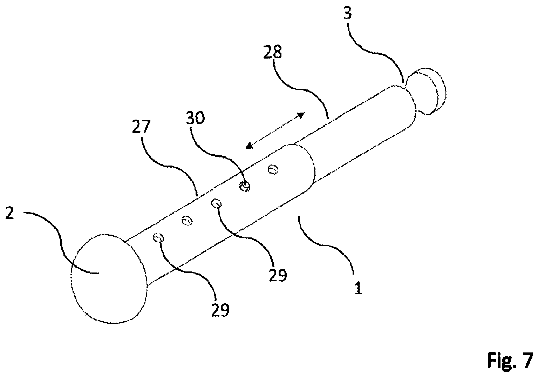

Die **Figur 7** zeigt einen Bolzen (1), der eine erste Bolzenhälfte (27) und eine zweite Bolzenhälfte (28) umfasst. Diese sind gegeneinander teleskopierbar verschiebbar (angedeutet durch den Doppelpfeil), wobei die zweite Bolzenhälfte (28) in der ersten Bolzenhälfte (27) geführt ist. Die Verschiebung ist nur dann möglich, wenn die gegenüberliegend angeordneten Federbolzen (hier nur einer dargestellt) manuell so weit in die Löcher (29) hineingedrückt werden, dass die Federbolzen nicht mehr in die Löcher greifen. Die Verschiebung der Bolzenhälften (27, 28) gegeneinander ist so lange möglich, bis die Federbolzen in danebenliegende Löcher greifen.

Die vorstehenden Ausführungen sind nur einige bevorzugte und realisierbare Ausführungsformen der vorliegenden Erfindung. Daher sind alle gleichwertigen strukturellen Änderungen, die durch Anwendung der Beschreibung der Erfindung vorgenommen werden, in den Umfang der Patentanmeldung einzubeziehen.

Obwohl die Erfindung unter Bezugnahme auf bestimmte Ausführungsbeispiele beschrieben und illustriert wurde, soll die Erfindung nicht auf diese Ausführungsbeispiele beschränkt werden. Der Fachmann erkennt, dass Variationen und Modifikationen vorgenommen werden können, ohne dass der wahre Umfang der Erfindung, wie er durch die Ansprüche und Beschreibung definiert ist, verlassen wird. Es ist daher beabsichtigt, im Rahmen der Erfindung alle Variationen und Modifikationen, die in den Anwendungsbereich der beigefügten Ansprüche und deren Äquivalente fallen, einzuschließen.

### BEZUGSZEICHEN

- 1: Bolzen
- 2: Anschlag
- 3: Vertiefung, Nut oder Einkerbung
- 4: Hohle Steckachse
- 5: Vorder- oder Hinterrad eines Motorrads
- 6: Schlosssystem
- 7: Kette, Seil oder vergleichbares Verbindungselement
- 8: Ring, Schlaufe oder ähnlich geschlossenes Element
- 9: Wand- oder Bodenanker
- 10: Gewinde
- 11: Sporn oder einer Erhöhung am Schlosssystem
- 12: Feststehender oder verankerter Gegenstand (z.B. Laterne, Baum, Leitplanke)
- 13: Schlüssel
- 14: erstes Ende eines Bolzens (1)
- 15: zweites Ende eines Bolzens (1)
- 16: drittes Ende eines Verbindungselements (7)
- 17: viertes Ende eines Verbindungselements (7)
- 18: Hinterradschwinge
- 19: Spannplatte des Kettenspanners
- 20: Spannschraube des Kettenspanners
- 21: Kontermutter
- 22: Wulst
- 23: Flachstelle des Wulstes
- 24: Unterlegscheibe
- 25: Achsmutter
- 26: Außengewinde der Hohlachse
- 27: erste Bolzenhälfte
- 28: zweite Bolzenhälfte
- 29: Loch
- 30: Federbolzen

## Patentansprüche

1. Diebstahlsicherung für Motorräder mit hohler Steckachse (**4**) an Vorder- und/oder Hinterrad (**5**), umfassend einen Bolzen (**1**) und ein Schlosssystem (**6**),
- wobei der Bolzen (**1**) derart ausgebildet ist, dass dieser in die hohle Steckachse (**4**) eines Vorder- oder Hinterrades eines Motorrads (**5**) derart einführbar ist, dass dieser durch das Schlosssystem (**6**) formschlüssig entlang einer Längsachse der hohlen Steckachse (**4**) sicherbar ist,
- wobei der Bolzen (**1**) an einem ersten Ende (**14**) einen Anschlag (**2**) umfasst, der als eine Begrenzung gegen ein gänzliches Hindurchstecken des Bolzens (**1**) durch die hohle Steckachse (**4**) eingerichtet ist,
- wobei der Bolzen (**1**) an einem zweiten Ende (**15**) zumindest eine Vertiefung, zumindest eine Nut und/oder zumindest eine Einkerbung (**3**) aufweist, die dazu eingerichtet ist, dass ein schließbar zu betätigendes Element des Schlosssystems (**6**) lösbar in die Vertiefung, Nut und/oder Einkerbung (**3**) eingreift, und
- wobei der Bolzen (**1**) an dem zweiten Ende (**15**) mit einem Schlosssystem (**6**) reversibel verbindbar ist, wobei das schließbar zu betätigende Element des Schlosssystems (**6**) in eine oder mehrere Vertiefungen, Nuten und/oder Einkerbungen (**3**) am Bolzen (**1**) eingreifbar ausgestaltet ist.

2. Diebstahlsicherung nach Anspruch 1, wobei der Bolzen (**1**) einen runden, ovalen oder eckigen Querschnitt aufweist.

3. Diebstahlsicherung nach Anspruch 1 oder 2, wobei das Schlosssystem (**6**) eine Kette, ein Stahlseil oder ein gleichwertiges Verbindungselement (**7**) umfasst, welches mit einem feststehenden oder verankerten Gegenstand (**12**) verbunden oder um einen feststehenden oder verankerten Gegenstand (**12**) umlegbar oder umführbar ist.

4. Diebstahlsicherung nach einem der Ansprüche 1 bis 3, wobei der Anschlag (**2**) eine abgerundete oder eckige Form aufweist.

5. Diebstahlsicherung nach einem der Ansprüche 1 bis 4, wobei der Durchmesser des Anschlags (**2**) entweder größer als der Durchmesser der hohlen Steckachse (**4**) ist, oder mittels einer Unterlegscheibe oder eines vergleichbar wirkenden Elements auf einen Durchmesser übersetzt wird, der größer als der Durchmesser der hohlen Steckachse (**4**) ist.

6. Diebstahlsicherung nach einem der Ansprüche 1 bis 5, wobei die Vertiefungen, Nuten oder Einkerbungen (**3**) eine solche Tiefe und/oder Breite aufweisen, so dass der Bolzen (**1**) und das Schlosssystem (**6**) im Verhältnis zueinander einen Bewegungsspielraum aufweisen.

7. Diebstahlsicherung nach einem der Ansprüche 1 bis 6, wobei der Bolzen (**1**) ganz oder teilweise aus einem gehärteten Stahl gebildet ist.

8. Diebstahlsicherung nach einem der Ansprüche 1 bis 7, wobei eine Kette, ein Stahlseil oder ein gleichwertiges Verbindungselement (**7**) an einem dritten Ende (**16**) mit dem Schlosssystem (**6**) und an einem vierten Ende (**17**) mit einem Ring, einer Schlaufe oder einem ähnlich geschlossenen Element (**8**) verbunden ist, durch das das Schlosssystem (**6**) genau nur dann hindurchführbar ist, wenn der Bolzen (**1**) nicht mit dem Schlosssystem (**6**) verbunden ist.

9. Diebstahlsicherung nach einem der Ansprüche 1 bis 8, wobei die Kette, das Stahlseil oder das gleichwertige Verbindungselement (**7**) an dem dritten Ende (**16**) mit dem Schlosssystem (**6**) und an dem vierten Ende (**17**) mit einem in Wand oder Boden fest verankerbaren oder verankerten Halteelement (**9**) verbunden ist.

10. Diebstahlsicherung nach einem der Ansprüche 1 bis 9, wobei der Bolzen (**1**) ein Gewinde (**10**) zum Aufschrauben einer Mutter aufweist, wobei die Mutter zur Fixierung des Bolzens (**1**) innerhalb der hohlen Steckachse (**4**) eingerichtet ist.

11. Diebstahlsicherung nach einem der Ansprüche 1 bis 10, wobei die Länge des Bolzens (**1**) einstellbar ist und an die Länge der hohlen Steckachse (**4**) anpassbar ist.

12. **Diebstahlsicherungssystem für Motorräder,** umfassend eine Diebstahlsicherung nach einem der Ansprüche 1 bis 11 und eine hohle Steckachse (**4**) eines Vorder- und/oder Hinterrades.

13. **Verfahren zum Sichern eines Motorrades vor Diebstahl,** insbesondere eines Motorrades mit hohler Steckachse (**4**), an Vorderrad und/oder Hinterrad (**5**), umfassend die folgenden Schritte
- Bereitstellen einer Diebstahlsicherung nach einem der Ansprüche 1 bis 11, wobei die Diebstahlsicherung einen Bolzen (**1**) und ein Schlosssystem (**6**) umfasst,
- Einführen des Bolzens (**1**) in die hohle Steckachse (**4**) eines Vorder- oder Hinterrades eines Motorrads (**5**), das eine hohle Steckachse (**4**) umfasst,
wobei der Bolzen (**1**) an einem ersten Ende (**14**) einen Anschlag (**2**) umfasst, der als eine Begrenzung gegen ein gänzliches Hindurchstecken des Bolzens (**1**) durch die hohle Steckachse (**4**) eingerichtet ist,
wobei der Bolzen (**1**) an einem zweiten Ende (**15**) zumindest eine Vertiefung, zumindest eine Nut und/oder zumindest eine Einkerbung (**3**) aufweist, die dazu eingerichtet ist, in das ein schließbar zu betätigendes Element eines Schlosssystems (**6**) lösbar in die Vertiefung, Nut und/oder Einkerbung eingreifbar ist,
- Führen des Schlosssystem (**6**) durch eine Kette, ein Stahlseil oder ein gleichwertiges Verbindungselement (**7**), welches mit einem feststehenden oder verankerten Gegenstand (**12**) verbunden oder um einen feststehenden oder verankerten Gegenstand (**12**) umlegbar oder umführbar ist, und
- Reversibles Verbinden des Bolzens (**1**) an dessen zweiten Ende (**15**) mit einem Schlosssystem (**6**), wobei die schließbar zu betätigenden Elemente des Schlosssystems (**6**) in eine oder mehrere Vertiefungen, Nuten und/oder Einkerbungen (**3**) am Bolzen (**1**) eingreifbar ausgestaltet sind.

14. **Verwendung einer Diebstahlsicherung** nach einem der Ansprüche 1 bis 11 oder eines **Diebstahlsicherungssystem** nach Anspruch 12 zum Sichern eines Motorrades, insbesondere eines Motorrades mit hohler Steckachse (**4**) an Vorder- und/oder Hinterrad (**5**).

15. **Verwendung eines Bolzens** (**1**) in einer Diebstahlsicherung nach einem der Ansprüche 1 bis 11 und/oder in einem Diebstahlsicherungssystem nach Anspruch 12 und/oder in einem Verfahren zum Sichern eines Motorrades vor Diebstahl nach Anspruch 13.
